# EUROPEAN PATENT SPECIFICATION

(11) **EP 4 140 686 B1**
(45) Date of publication and mention of the grant of the patent: **05.02.2025**
(21) Application number: 21213970.3
(22) Date of filing: 13.12.2021
(51) Int. Cl.: B29C 44/12, A43B 13/12, B29D 35/00, B29L 31/50, A43B 13/14, A43B 13/18, B29D 35/12

(54) **METHOD FOR COMBINING FOAM WITH REINFORCED CORE**
VERFAHREN ZUR KOMBINATION VON SCHAUM MIT VERSTÄRKTEM KERN
PROCÉDÉ DE COMBINAISON DE MOUSSE À ÂME RENFORCÉE

(30) Priority: 23.08.2021 TW 110130996; 05.11.2021 TW 110141372
(43) Date of publication of application: 01.03.2023
(73) Proprietor: Otrajet Inc., Taichung City 407 (TW)
(72) Inventor: CHEN, Ching-Hao, 407 TAICHUNG CITY (TW); YEH, Liang-Hui, 407 TAICHUNG CITY (TW)
(74) Representative: Lang, Christian

(56) References cited:
- EP-A2- 1 867 455
- WO-A1-01/79624
- WO-A1-2013/138439
- DE-A1- 1 704 329
- US-A1- 2009 255 625

## Description

### BACKGROUND OF THE INVENTION

### Field of Invention

The invention is related to polymer molding and processing technique, and more particularly to a method for combining a foam with a reinforced core.

### Related Art

In the patent US 6032388 A, a technical content of using a non-foamed sheet material as a sole tread is disclosed. It is disclosed that a plurality of perforations are provided on the sheet, a mold is used to provide a shape, and a plurality of anchoring portions which respectively pass through the perforations and protrude from both sides of the sheet are formed from a wear-resistant material, and then an adhesive is used to adhere the sheet material and the anchoring portions attached thereon on a bottom surface of the foam sole to serve as the tread of the shoe.

Document EP 1 867 455 A2 discloses a cushion body and a manufacturing method for the same. In document DE 17 04 329 A1 a mold is described for the production of sandals from foam plastic which can be cast and hardened into a viscoplastic material. Document WO 01/79624 A1 describes an architectural flooring plate spaced from a concrete bottom and a method of manufacturing the same.

Although the above disclosed technique can provide physical properties different from that of foamed materials by the sheet material, the technical content that still requires using the adhesive to bond the sheet material to the sole component is not ideal.

### SUMMARY OF THE INVENTION

A main object of the invention is to provide a method for combining a foam with a reinforced core. An article made by the method disclosed herein is capable of eliminating use of adhesives to complete combination between the foam and the reinforced core to further improve a bonding strength between the foam and the reinforced core.

In order to achieve the above-mentioned object, a method for combining a foam with a reinforced core according to claim 1 is provided by the invention. Preferred embodiments are subject matter of the dependent claims.

A combinational article of a foam and a reinforced core is formed by enclosing the sheet-like reinforced core with a plurality of perforations by the foam completely, and at the same time, the foam is also present in the perforations, between an interior of the foam and the reinforced core, the partial foam existing in the perforations is capable of connecting with the foam on two sides of the reinforced core, so that the foam is closely attached on the reinforced core to avoid the problem that the foam and the reinforced core are difficult to be combined with each other through bonding due to the absence of bonding means using adhesives or the heterogeneity between the foam and the reinforced core, which is prone to peeling off or detachment between the foam and the reinforced core, resulting in the drawbacks of poor quality and short service life.

On the other hand, the method for combining the foam with the reinforced core provided by the invention is used to make the combinational article of the foam and the reinforced core. Its main technical feature is that, in order for the foam to form a complete enclosing on a peripheral side of the reinforced core, when molding is performed with a mold, the reinforced core has to be located in a mold chamber defined by the mold, and the peripheral side of the reinforced core and a chamber wall surrounding the mold chamber are separated from each other, and then a molten polymer raw material containing a foaming agent is filled into the mold chamber to be foamed and molded by the mold chamber. In a process of entering the mold chamber and foaming, the polymer raw material can be synchronously foamed and molded in the perforations of the reinforced core, so that the molded foam and the reinforced core are interlaced with each other structurally and closely attached to each other to obtain a good bonding effect.

In order to maintain a proper interval between the reinforced core and the chamber wall surrounding the mold chamber, the mold further comprises a plurality of first position protruding points formed by protruding from the chamber wall in the mold chamber in an opposite direction of gravity, and the reinforced core is placed on free ends of the first position protruding points to ensure a distance between the reinforced core and the chamber wall of the mold chamber.

In order to further stabilize a position of the reinforced core in the mold chamber, a plurality of second position protruding points protrude on the chamber wall of the mold chamber on another side relative to the side with the first position protruding points, and a distance between the free ends of the first position protruding points and free ends of the second position protruding points is equal to a thickness of a sheet of the reinforced core, so that the reinforced core can be sandwiched and fixed between the first position protruding points and the second position protruding points.

Each of the first position protruding points and each of the second position protruding points can be a fixed type pin or a retractable movable pin.

In addition to the above-mentioned positioning technique for the reinforced core, an unfoamed embryo pre-molded with a raw material having a same matrix as that of the polymer raw material may be placed in the mold chamber, and a surface of the embryo is used to place and support the reinforced core, so that the reinforced core is separated from the chamber wall of the mold chamber to obtain the same positioning effect achieved by adopting the above-mentioned position protruding points, and when the polymer raw material is foamed and molded, a chemical bond can be formed between the polymer raw material and the embryo under the condition of the same matrix to obtain a good combination structure.

### BRIEF DESCRIPTION OF THE DRAWINGS

FIG. 1 is a perspective view of a reinforced core for use in a method for combining a foam with a reinforced core according to a preferred embodiment of the invention.
FIG. 2 is a manufacturing flow diagram.
FIG. 3 is a perspective view of a combinational article being made by the method for combining a foam with a reinforced core according to a preferred embodiment of the present invention.
FIG. 4 is a cross-sectional view of the combinational article along section line 4-4 in FIG. 3 and a partial enlarged view thereof.

### DETAILED DESCRIPTION OF THE INVENTION

Hereinafter, a preferred embodiment of the invention in conjunction with the drawings is used for further description.

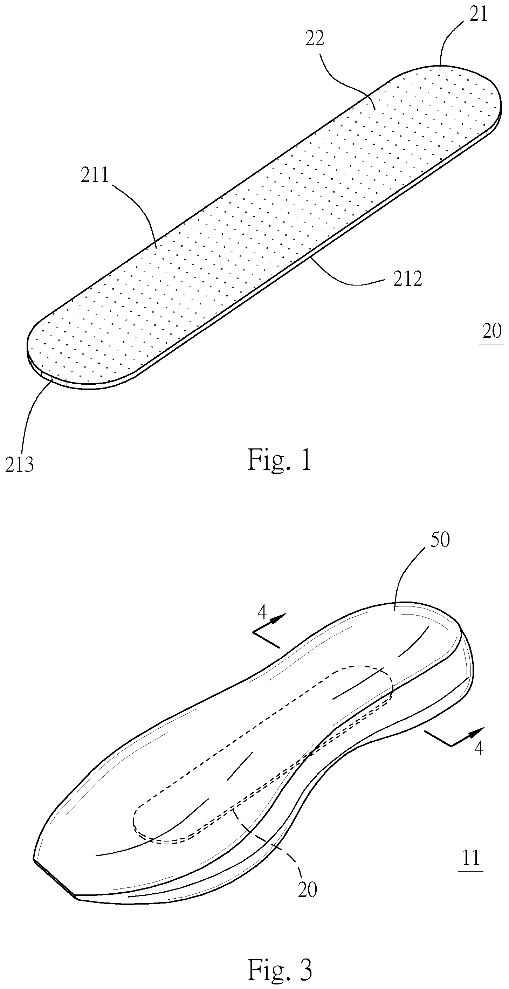

In a method 10 for combining a foam with a reinforced core disclosed in a preferred embodiment of the invention, a reinforced core 20 used is as shown in FIG. 1, the reinforced core 20 has a thin sheet 21 and a plurality of perforations 22 penetrating through the sheet 21, wherein, in order to tackle the drawback of poor strength of the reinforced core 20 due to the reinforced core 20 being a reinforced foam with an elasticity provided by a foamed structure, a material of the sheet 21 can be selected according to actual requirements, such as an article that is non-foamed, substantially non-foamed, or an article still has the required mechanical strength and elasticity after foaming and made of thermoplastic polymer material, thermosetting polymer material, elastic polymer material, carbon fiber or other composite materials, so that the reinforced core 20 has a higher hardness than ordinary foam to meet an object of reinforcement. A hole diameter size of the perforations 22 is limited to a range that does not greatly affect a strength of the sheet 21. Generally speaking, the perforations 22 only need to be small holes, that is, big enough for entry of a polymer raw material, and can also meet the requirements of the invention. Of course, the perforations 22 can also be set as holes with different hole diameters to be disposed on different areas of the sheet 21 according to required characteristics of the reinforced core 20 for specific application or usage of a molded article, such as making the reinforced core 20 easy to bend and deform structurally or maintaining the highest possible strength.

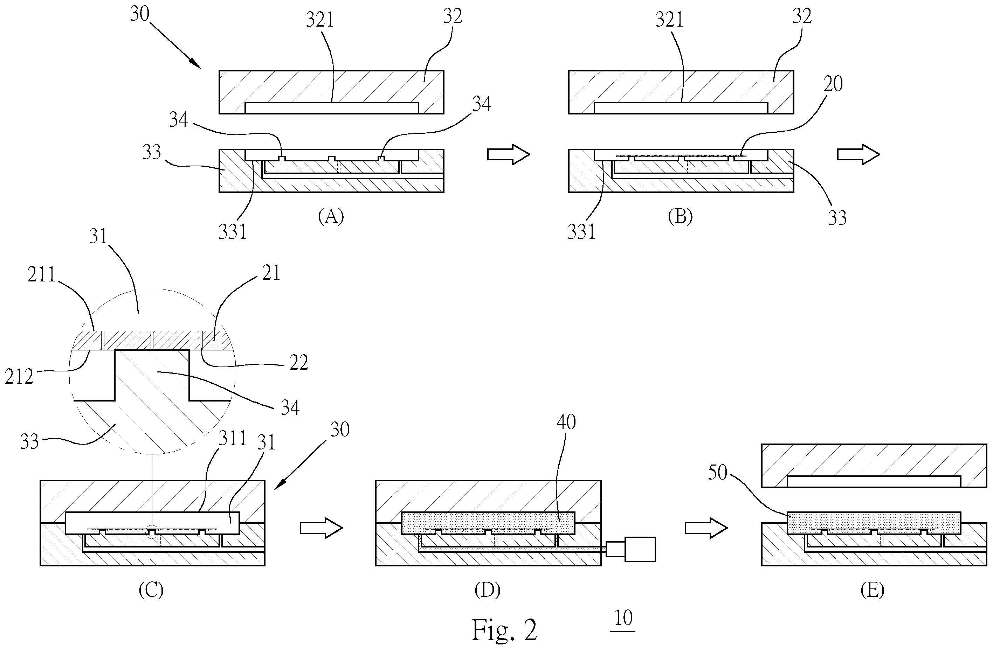

Please continue to refer to FIG. 2. Implementation of the method 10 for combining the foam with the reinforced core comprises following steps.

First, placing the reinforced core 20 into a mold chamber 31 defined by a mold 30.

As shown in FIG. 2 (A) (B) (C), the mold 30 has an upper mold plate 32 which is different to a mold plate used for the claimed invention and a lower mold plate 33 that can be overlapped and connected with or separated from each other. In Fig. 2 the second position protruding points of the upper mold plate according to the invention are not shown. When the upper mold plate 32 and the lower mold plate 33 are overlapped and connected with each other and located at a mold clamping position, the mold chamber 31 in a closed space state is defined between a bonding interface of the upper mold plate 32 and the lower mold plate 33. When the upper mold plate 32 and the lower mold plate 33 are separated from each other and located at a mold opening position, the closed state of the mold chamber 31 is lost. The upper mold plate 32 and the lower mold plate 33 are separately disposed to define mold cavities 321, 331 of the mold chamber 31 in an open state. The reinforced core 20 is placed into the mold cavity 331 of the lower mold plate 33 when the mold 30 is at the mold opening position, and then the upper mold plate 32 is stacked on the lower mold plate 33, so that the reinforced core 20 is accommodated in the mold chamber 31.

Wherein, as for the mold chamber 31 in the mold clamping state, a sheet surface 211 on one side, a sheet surface 212 on another side, and a peripheral edge 213 of the sheet 21 are facing a chamber wall 311 of the mold chamber 31, and are separated from the chamber wall 311 without abutting against the chamber wall 311. In order to maintain a separation state between the reinforced core 20 and the chamber wall 311 surrounding the mold chamber 31, an appropriate support structure can be provided between the reinforced core 20 and the chamber wall 311 of the mold chamber 31 in the direction of gravity, and the reinforced core 20 can be supported on the appropriate support structure. In a feasible embodiment, three protruding points 34 of pins, posts or protrusions arranged in a triangular configuration and with a height smaller than the mold chamber 31 can be protruded from a bottom surface of the mold cavity 331 of the lower mold plate 33, and upper free ends of the protruding points 34 are used to place and support the sheet 21 of the reinforced core 20 to maintain a separation state between the reinforced core 20 and the bottom surface of the mold cavity 331 of the lower mold plate 33. The protruding points 34 serving as supporting elements can be fixed on the lower mold plate 33 or movably disposed on the lower mold plate 33 for retracting, stretching or displacing. In another feasible embodiment, a preformed, non-foamed or unfoamed embryo (not shown in the figures) can be placed on the bottom surface of the mold cavity 331 of the lower mold plate 33 as a supporting element, and then the reinforced core 20 is placed on the embryo directly, so that an effect of separating the reinforced core 20 from the bottom surface of the mold cavity 331 of the lower mold plate 33 can be obtained.

Then, a molten polymer raw material 40 containing a foaming agent such as a supercritical fluid is filled into the mold chamber 31 through a suitable runner, so that the polymer raw material 40 is at least filled in a part of mold chamber space of the mold chamber 31 between the sheet surface 211 of the sheet 21 and the top chamber wall 311 of the mold chamber 31, and in hole spaces of the perforations 22. Wherein, when the supporting technique used for the reinforced core 20 is the protruding points 34, the rated polymer raw material 40 is filled in an entire space of the mold chamber 31, as shown in FIG. 2(D); but when the supporting technique used is the embryo, the rated polymer raw material 40 is only filled in a part of the mold chamber space of the mold chamber 31 and the hole spaces of the perforations 22.

After a process of filling the polymer raw material 40 into the mold chamber 31 is completed, foaming can be performed in the mold chamber 31 and molded into a foam 50 by the mold chamber 31, and the mold 30 can be opened as shown in FIG. 2(E) to take out a finished product. At this time, in addition to the finished foam 50 being capable of completely enclosing the entire reinforced core 20, the polymer raw material 40 located in the perforations 22 after foaming and forming can be used as a connecting structure for connecting a part of the foam 50 located outside the sheet surface 211 and the sheet surface 212 of the reinforced core 20, thereby, a close bonding effect is obtained between the reinforced core 20 and the foam 50, and a stability of bonding between the reinforced core 20 and the foam 50 is ensured. In another embodiment where only a part of the mold chamber space of the mold chamber 31 is filled, the embryo should contain a component that can be bonded with the polymer raw material 40, or both the embryo and the polymer raw material 40 have a same matrix; thereby, in a state of contacting with the embryo, a bond can be formed between the polymer raw material 40 located in the perforations 22, and the polymer raw material 40 located on a peripheral side of the reinforced core 20 to obtain the same effect as described above.

On the other hand, in order to make a combinational article of the foam 50 and the reinforced core 20 to be easily recycled to achieve better environmental protection effect, a material with a same matrix as that of the foam 50 can be selected for manufacturing the sheet 21 of the reinforced core 20, for example, materials used for manufacturing both the polymer raw material 40 and the sheet 21 have to contain TPU, TPE, PU, EVA or other recyclable raw materials, so that when the combinational article is recycled, the foam 50 and the reinforced core 20 can be recycled synchronously in a same recycling process. And with the same matrix material between the foam 50 and the reinforced core 20, besides structural connection can be achieved in the foam 50 through the perforations 22, an interface between the foam 50 and the sheet 21 in contact with each other can obtain better bonding strength through bonding of the same matrix to each other, so as to increase a service life of the combinational article.

In addition, in a process of filling the polymer raw material 40 into the mold chamber 31, before filling the polymer raw material 40, an appropriate inert gas or carbon dioxide can be filled into the mold chamber 31 to form a back pressure. After a rated material filling volume is filled, the filled back pressure gas is vented instantaneously, so that the polymer raw material 40 is foamed while the back pressure disappears.

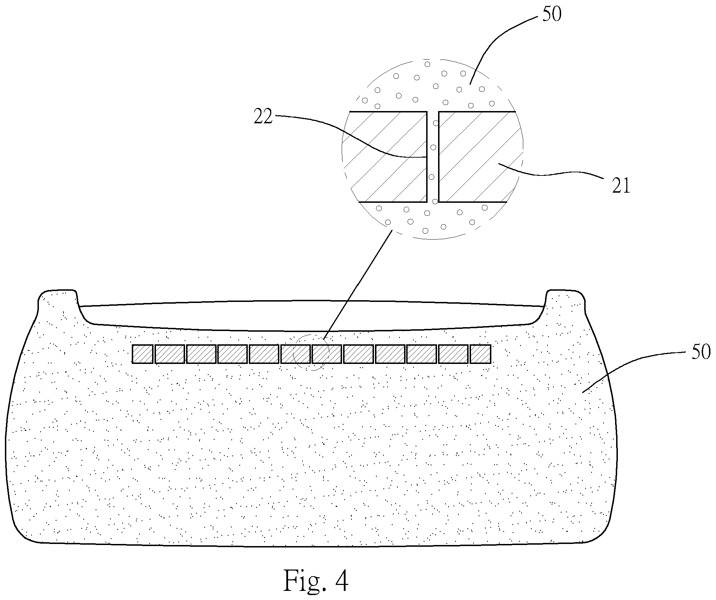

Please refer to FIGS. 3 and 4, a combinational article 11 of a foam and a reinforced core made by the above-mentioned method is structurally capable of completely enclosing the entire reinforced core 20 by using the foam 50, and at the same time, the foamed part formed in each of the perforations 22 is used as a bonding element for bridging connection to connect with a part of the foam 50 located outside the sheet surface 211 and the sheet surface 212 of the reinforced core 20, so that the combinational article 11 of the foam and the reinforced core can have an elasticity of the foam 50 and a rigidity of the reinforced core 20. When the combinational article 11 is used as a sole, comfort level of wearing and treading stability for a user can be greatly improved.

## Claims

1. A method (10) for combining a foam (50) with a reinforced core (20) comprising following steps of:
adopting a reinforced core (20), the reinforced core (20) having a thin sheet (21) and a plurality of perforations (22) penetrating through the sheet (21) respectively,
adopting a mold (30), the mold (30) having at least two mold plates (32, 33), the mold plates (32, 33) moving relatively to each other between a mold clamping position and a mold opening position under an action of external force, when the mold plates (32, 33) being located at the mold clamping position, defining a mold chamber (31) with a closed space between the mold plates (32, 33),
locating the reinforced core (20) in the space of the mold chamber (31), separating one sheet surface (211) and another sheet surface (212) on two opposite sides of the reinforced core (20) from chamber walls (311) on two sides of the mold chamber (31) facing the two sheet surfaces (211, 212) respectively, and
filling a rated molten polymer raw material (40) containing a foaming agent at least into a part of the space of the mold chamber (31) and hole spaces of the perforations (22) to be foamed and molded in the mold chamber (31), wherein a part of the space of the mold chamber (31) refers to a space between the sheet surface (211) on one of the sides of the reinforced core (20) and the chamber wall (311) on one of the sides of the mold chamber (31) facing the sheet surface (211),
wherein the mold (30) further comprises a plurality of first position protruding points formed by protruding from the chamber wall (311) in the mold chamber (31) in an opposite direction of gravity, and the reinforced core (20) is placed on free ends of the first position protruding points to ensure a distance between the reinforced core (20) and the chamber wall (311) of the mold chamber (31),
**characterized in that** a plurality of second position protruding points protrude on the chamber wall (311) of the mold chamber (31) on another side relative to the side with the first position protruding points, and a distance between the free ends of the first position protruding points and free ends of the second position protruding points is equal to a thickness of a sheet (21) of the reinforced core (20), so that the reinforced core can be sandwiched and fixed between the first position protruding points and the second position protruding points.

2. The method (10) for combining the foam (50) with the reinforced core (20) as claimed in claim 1, wherein the rated polymer raw material (40) is filled in the entire space of the mold chamber (31) except a space where the reinforced core (20) is located.

3. The method (10) for combining the foam (50) with the reinforced core (20) as claimed in claim 1, before the polymer raw material (40) entering the mold chamber (31), further disposing an embryo between the other sheet surface (212) of the reinforced core (20) and the chamber wall (311) of the mold chamber (31) facing the other sheet surface (212).

4. The method (10) for combining the foam (50) with the reinforced core (20) as claimed in claim 3, wherein the polymer raw material (40) and the embryo respectively comprise a same matrix.

5. The method (10) for combining the foam (50) with the reinforced core (20) as claimed in claim 3 or 4, wherein the embryo does not comprise a foaming agent and is unfoamed.

6. The method (10) for combining the foam (50) with the reinforced core (20) as claimed in claim 1, wherein the foaming agent contained in the polymer raw material (40) is a supercritical fluid.

7. The method (10) for combining the foam (50) with the reinforced core (20) as claimed in claim 1, wherein a peripheral edge (213) of the reinforced core (20) is separated from the chamber wall surrounding the mold chamber (31).

8. The method (10) for combining the foam (50) with the reinforced core (20) as claimed in claim 1, wherein the reinforced core (20) is made of a thermoplastic polymer material, a thermosetting polymer material, an elastic polymer material or a composite material.

## Patentansprüche

1. Verfahren (10) zum Kombinieren eines Schaumstoffs (50) mit einem verstärkten Kern (20), welches die folgenden Schritte umfasst:
Verwendung eines verstärkten Kerns (20), wobei der verstärkte Kern (20) eine dünne Platte (21) und eine Vielzahl von Perforationen (22) aufweist, die die Platte (21) jeweils durchdringen,
Verwendung einer Form (30), wobei die Form (30) mindestens zwei Formplatten (32, 33) aufweist, wobei sich die Formplatten (32, 33) relativ zueinander zwischen einer Formklemmstellung und einer Formöffnungsstellung unter einer Einwirkung einer äußeren Kraft bewegen, und wenn sich die Formplatten (32, 33) in der Formklemmstellung befinden, eine Formkammer (31) mit einem geschlossenen Raum zwischen den Formplatten (32, 33) definiert wird,
Anordnen des verstärkten Kerns (20) im Raum der Formkammer (31), Trennen einer Plattenoberfläche (211) und einer anderen Plattenoberfläche (212) an zwei gegenüberliegenden Seiten des verstärkten Kerns (20) von Kammerwänden (311) an zwei Seiten der Formkammer (31), die den beiden Plattenoberflächen (211, 212) jeweils zugewandt sind, und
Einfüllen eines bewerteten geschmolzenen Polymerrohmaterials (40), das ein Schäumungsmittel enthält, zumindest in einen Teil des Raums der Formkammer (31) und Lochräume der Perforationen (22), die in der Formkammer (31) geschäumt und geformt werden sollen, wobei sich ein Teil des Raums der Formkammer (31) auf einen Raum zwischen der Plattenoberfläche (211) an einer der Seiten des verstärkten Kerns (20) und der Kammerwand (311) an einer der Seiten der Formkammer (31), die der Plattenoberfläche (211) zugewandt ist, bezieht,
wobei die Form (30) ferner eine Vielzahl von ersten Positionsvorsprungspunkten umfasst, die so ausgebildet sind, dass sie von der Kammerwand (311) in die Formkammer (31) in einer der Schwerkraft entgegengesetzten Richtung vorstehen, und der verstärkte Kern (20) ist an freien Enden der ersten
Positionsvorsprungspunkte platziert, um einen Abstand zwischen dem verstärkten Kern (20) und der Kammerwand (311) der Formkammer (31) sicherzustellen,
**dadurch gekennzeichnet, dass**
eine Vielzahl von zweiten Positionsvorsprungspunkten an der Kammerwand (311) der Formkammer (31) an einer anderen Seite in Bezug auf die Seite mit den ersten Positionsvorsprungspunkten vorsteht, und ein Abstand zwischen den freien Enden der ersten Positionsvorsprungspunkte und freien Enden der zweiten Positionsvorsprungspunkte ist gleich einer Dicke einer Platte (21) des verstärkten Kerns (20), sodass der verstärkte Kern zwischen den ersten Positionsvorsprungspunkten und den zweiten Positionsvorsprungspunkten eingeklemmt und befestigt werden kann.

2. Verfahren (10) zum Kombinieren des Schaumstoffs (50) mit dem verstärkten Kern (20) nach Anspruch 1, bei welchem das bewertete Polymerrohmaterial (40) in den gesamten Raum der Formkammer (31) gefüllt wird, mit Ausnahme eines Raums, in dem sich der verstärkte Kern (20) befindet.

3. Verfahren (10) zum Kombinieren des Schaumstoffs (50) mit dem verstärkten Kern (20) nach Anspruch 1, bei welchem vor dem Eintreten des Polymerrohmaterials (40) in die Formkammer (31) ferner ein Embryo zwischen der anderen Plattenoberfläche (212) des verstärkten Kerns (20) und der Kammerwand (311) der Formkammer (31), die der anderen Plattenoberfläche (212) zugewandt ist, angeordnet wird.

4. Verfahren (10) zum Kombinieren des Schaumstoffs (50) mit dem verstärkten Kern (20) nach Anspruch 3, bei welchem das Polymerrohmaterial (40) und der Embryo jeweils eine gleiche Matrix umfassen.

5. Verfahren (10) zum Kombinieren des Schaumstoffs (50) mit dem verstärkten Kern (20) nach Anspruch 3 oder 4, bei welchem der Embryo kein Schäumungsmittel umfasst und ungeschäumt ist.

6. Verfahren (10) zum Kombinieren des Schaumstoffs (50) mit dem verstärkten Kern (20) nach Anspruch 1, bei welchem das in dem Polymerrohmaterial (40) enthaltene Schäumungsmittel ein superkritisches Fluid ist.

7. Verfahren (10) zum Kombinieren des Schaumstoffs (50) mit dem verstärkten Kern (20) nach Anspruch 1, bei welchem eine Umfangskante (213) des verstärkten Kerns (20) von der die Formkammer (31) umgebenden Kammerwand getrennt ist.

8. Verfahren (10) zum Kombinieren des Schaumstoffs (50) mit dem verstärkten Kern (20) nach Anspruch 1, bei welchem der verstärkte Kern (20) aus einem thermoplastischen Polymermaterial, einem duroplastischen Polymermaterial, einem elastischen Polymermaterial oder einem Verbundmaterial gefertigt ist.

## Revendications

1. Procédé (10) de combinaison d'une mousse (50) avec une âme renforcée (20) comprenant les étapes suivantes de :
adoption d'une âme renforcée (20), l'âme renforcée (20) présentant une feuille mince (21) et une pluralité de perforations (22) pénétrant à travers la feuille (21) respectivement, adoption d'un moule (30), le moule (30) présentant au moins deux plaques de moulage (32, 33), les plaques de moulage (32, 33) se déplaçant relativement l'une par rapport à l'autre entre une position de serrage de moule et une position d'ouverture de moule sous l'action d'une force externe lorsque les plaques de moulage (32, 33) sont situées en position de serrage de moule, définissant une chambre de moulage (31) avec un espace fermé entre les plaques de moulage (32, 33),
positionnement de l'âme renforcée (20) dans l'espace de la chambre de moulage (31), séparant une surface de feuille (211) et une autre surface de feuille (212) sur deux côtés opposés de l'âme renforcée (20) des parois (311) de chambre sur deux côtés de la chambre de moulage (31) tournées vers les deux surfaces de feuille (211, 212) respectivement, et
introduction d'une matière première polymère fondue homologuée (40) contenant un agent moussant au moins dans une partie de l'espace de la chambre de moulage (31) et des espaces de trous des perforations (22) à expanser et mouler dans la chambre de moulage (31), dans lequel une partie de l'espace de la chambre de moulage (31) fait référence à un espace compris entre la surface de feuille (211) de l'un des côtés de l'âme renforcée (20) et la paroi (311) de chambre de l'un des côtés de la chambre de moulage (31) tournée vers la surface de feuille (211),
dans lequel le moule (30) comprend en outre une pluralité de points saillants de première position formés en faisant saillie depuis la paroi (311) de chambre dans la chambre de moulage (31) dans une direction opposée à la gravité, et l'âme renforcée (20) est placée sur des extrémités libres des points saillants de première position pour garantir une distance entre l'âme renforcée (20) et la paroi (311) de chambre de la chambre de moulage (31),
**caractérisé en ce qu'**une pluralité de points saillants de seconde position font saillie sur la paroi (311) de chambre de la chambre de moulage (31) sur un autre côté par rapport au côté avec les points saillants de première position, et une distance entre les extrémités libres des points saillants de première position et des extrémités libres des points saillants de seconde position est égale à une épaisseur d'une feuille (21) de l'âme renforcée (20), de sorte que l'âme renforcée puisse être prise en sandwich et fixée entre les points saillants de première position et les points saillants de seconde position.

2. Procédé (10) de combinaison de la mousse (50) avec l'âme renforcée (20) selon la revendication 1, dans lequel la matière première polymère homologuée (40) est introduite dans tout l'espace de la chambre de moulage (31) à l'exception d'un espace où est située l'âme renforcée (20).

3. Procédé (10) de combinaison de la mousse (50) avec l'âme renforcée (20) selon la revendication 1, avant que la matière première polymère (40) n'entre dans la chambre de moulage (31), disposant en outre un embryon entre l'autre surface de feuille (212) de l'âme renforcée (20) et la paroi (311) de chambre de la chambre de moulage (31) tournée vers l'autre surface de feuille (212).

4. Procédé (10) de combinaison de la mousse (50) avec l'âme renforcée (20) selon la revendication 3, dans lequel la matière première polymère (40) et l'embryon comprennent respectivement une même matrice.

5. Procédé (10) de combinaison de la mousse (50) avec l'âme renforcée (20) selon la revendication 3 ou 4, dans lequel l'embryon ne comprend pas d'agent moussant et est non expansé.

6. Procédé (10) de combinaison de la mousse (50) avec l'âme renforcée (20) selon la revendication 1, dans lequel l'agent moussant contenu dans la matière première polymère (40) est un fluide supercritique.

7. Procédé (10) de combinaison de la mousse (50) avec l'âme renforcée (20) selon la revendication 1, dans lequel un bord périphérique (213) de l'âme renforcée (20) est séparé de la paroi de chambre entourant la chambre de moulage (31).

8. Procédé (10) de combinaison de la mousse (50) avec l'âme renforcée (20) selon la revendication 1, dans lequel l'âme renforcée (20) est en matière polymère thermoplastique, matière polymère thermodurcissable, matière polymère élastique ou matière composite.
